# EUROPEAN PATENT SPECIFICATION

(11) **EP 1 637 056 B1**
(45) Date of publication and mention of the grant of the patent: **18.04.2007**
(21) Application number: 05020888.3
(22) Date of filing: 27.10.1998
(51) Int. Cl.: A47J 43/042

(54) **Food blending apparatus**
Mischgerät für Nahrungsmittel
Mélangeur d'aliments

(30) Priority: 29.10.1997 GB 9722711
(43) Date of publication of application: 22.03.2006
(62) Divisional of application: 05010604.6
(73) Proprietor: McGill Technology Limited, West Malling, Kent ME19 5TW (GB)
(72) Inventor: McGill, Shane Robert, Addington West Malling Kent ME19 5TW (GB)
(74) Representative: Chettle, Adrian John

(56) References cited:
- EP-A- 0 156 137
- EP-A- 0 562 310
- DE-A- 3 046 157
- DE-U1- 8 915 094
- FR-A- 1 565 187
- US-A- 1 174 828
- US-A- 4 889 248
- US-A- 5 533 801
- PATENT ABSTRACTS OF JAPAN vol. 016, no. 338 (C-0965), 22 July 1992 (1992-07-22) & JP 04 099553 A (MATSUSHITA ELECTRIC IND CO LTD), 31 March 1992 (1992-03-31)

## Description

This invention relates to food blending apparatus and to a method of blending food within a container. The invention has particular application to milk shakes but can be used with other food products which need to be blended, particularly those which need to be dispensed ready for consumption in retail premises.

Hitherto milk shakes have been produced by manually placing ice cream, milk and flavouring into a blender jug into which a blender is inserted to produce the blended milk shake. The milk shake is then poured into a receptacle from which the customer consumes the product. The blender jug then has to be cleaned and sanitised for re-use. However, in the present fast food market there is a demand for a better system for producing milk shakes taking account of health regulations, labour costs, waste, product quality and the level of skill of the operator. Current milkshake systems provide for improved pasteurisation but such systems are more expensive and more complicated. Moreover, some of such systems are limited in the flavours which can be produced.

An object of this invention is to provide food blending apparatus and a method of food blending which overcomes problems with existing systems.

Korean Utility Model Publication No. 1996-7233 shows a cup having a thread about its open end and a die cast actuating body configured to be threadingly engaged on the cup to seal product within the cup, wherein a rotatable blade is carried on the actuating body. In use, the actuating body is united with the cup, and together they are inverted and placed on a base unit, wherein drive means on the actuating body can be driven for rotating the blade. The cup is intended to be held manually on the base unit and blending only occurs when the a user "pushes down" on the cup, whereby a projection on the actuating body triggers a switch to cause rotation of the blade. If downwards pressure is released, the switch is released and blending is interrupted.

According to the invention, there is provided an apparatus for blending food products comprising a container and a lid for the container, wherein rotary blending means are carried on the lid, the blending means being driveably connectable to drive means externally of the container for rotation thereof, the apparatus further comprising a seating for receiving the container with its lid lowermost for blending and having drive means directed upwardly for engagement with the blending means, characterised in that the container includes a lip about its open end, and the lid having an outer portion to fit over the lip to be sealingly engaged over the open end.

Preferably, the container is disposable and more preferably an underside of the lip is engaged by a tube which surrounds the container so as to hold the lip between the tube and the lid.

The containers are preferably nestable with each other by locating a container into an open end of another container.

Further features of the invention will appear from the following description of various embodiments of the invention given by way of example only and with reference to the drawings, in which:
Fig 1 shows a vertical section through a food blending container for use with food blending apparatus, the lid part of the container being shown disassembled in the upper part of Fig 1,
Fig 2 shows the container associated with a support and drive arranged for a blending process, and
Fig 3 is a scrap vertical section showing an optional feature of the container of Fig 1.

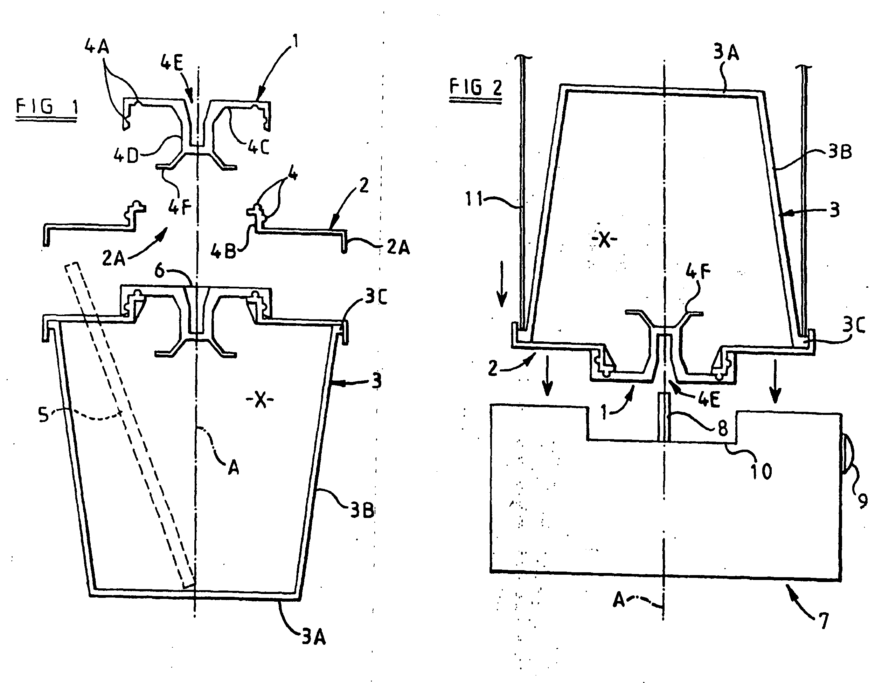

Referring to the drawings and firstly to Fig 1 there is shown a container for use in blending apparatus which comprises a body portion 3 consisting of a plastics vessel in the shape of a beaker having a base 3A, upwardly diverging, circular cross-section side walls 3B and an upper edge 3C of the container 3 with an outwardly directed lip. The container is nestable with other containers by location of the base through the upper opening of another container.

The container body or vessel 3 is provided with a closure member 2 constituting a lid arranged to fit over the upper end of the body 3 and to close the opening at the top of the body. The lid 2 is generally circular having an outer portion 2A which fits over the upper end 3C of the body 3 to be sealingly engaged over the opening. This may be by a clip arrangement, by heat sealing, or by any other suitable means for securing the lid 2 on the body 3.

At the centre of the lid 2 is formed a rotatable blending element or impeller 1 sealingly carried on the lid 2 but for rotation relative thereto about the axis A of the container. The blending element 1 is retained on the lid by circular retaining portions 4 formed on the lid 2 which engage in corresponding circular grooves 4A formed in the member 1. The retaining portions 4 are formed on an upstanding, inverted L-shaped portion 4B of the lid 2 which extends around a central opening 2A formed in the lid 2. Other means may be used to obtain seals but which also permit relative rotation between the element 1 and its support.

The blending element 1 fits over the circular L-shaped member 4B by the provision of a correspondingly shaped portion of the element 1 which extends inwards over region 4C towards an integral impeller portion 4D which extends downwards into the body of the container and defines a hollow central portion 4E shaped to be engageable by drive means, to be described. At the lower end of the impeller portion 4D is formed an outwardly directed impeller member 4F which, in this case, is a downwardly inclined and outwardly directed shaped member. In practice the impeller member 4F is shaped to give the desired blending action to product within the product space X within the assembled container according to known practice. Thus, for example, the impeller membermay have inclined surfaces to help to generate a vortex within the product in space X, or there may be individual arms extending outwardly from the axis with or without inclined surfaces. Alternatively the impeller member may give a gentle mixing action, in which case the impeller may comprise a disc.

A removable diaphragm 6 may be provided on the rotatable member 1 for releasable location closing the opening 4E. The purpose of the diaphragm 6 is to seal the container during transit, the diaphragm 6 being removable prior to placing the assembled container with product on associated apparatus whereby the product within the container is blended. The diaphragm may be heat sealed to the lid 2 and, instead of removable, it may be pierced by drive means 8 for rotating the element 1.

As will be seen from Fig 1 the lid 2 may be formed with a sealed opening through which a straw 5 may be inserted, after blending, to enable the product to be drawn out of the container with the straw. The straw 5 may be inserted through an existing opening or through a weakened area of the lid 2 to gain access to the product, in known manner. Alternatively access for the straw may be through an opening covered by a removable diaphragm or through a moulded tube of which a closed end may be removed for access by the straw. Alternatively the lid 2, together with the associated rotatable blending element 1 is removable, after blending, to gain access to the product within the container body 3 after blending.

Referring now to Fig 2, the container of Fig 1, after assembly and with product within the container, is inverted, as shown, to effect a blending action. In Fig 2 there is shown a housing 7 which acts as a support for the container and which houses a drive motor (not shown) from which is directed a drive shaft 8. A stop-start switch 9 is located on the housing 7 to actuate the drive motor and drive shaft 8, or the motor may be started by a proximity or pressure switch operated by location of the container on the support.

The drive shaft 8 is arranged to drivingly engage the opening 4E of the rotatable blending element 1 so that as the drive shaft 8 is rotated it rotates the element 1 to blend product within the container. The drive shaft 8 is located to extend from a recessed portion 10 of the housing 7, the recessed portion receiving the rotatable element 1 for rotation with the drive shaft 8 and the upper surface of the lid 2 being supported on the upper surface of the housing 7 around the recess 10. The container is retained on the housing 7 by a locking tube 11 which surrounds the container body 3 and moves reciprocally to engage with the lip 3C of the body 3 during a blending operation.

Thus it will be seen that the container is held in position by the tube 11 with the container seated on the housing 7, the product is blended by operation of the drive shaft 8 to rotate the element 1 and cause product within the space X to be mixed, aerated (if necessary) and blend the different components of the product thereby forming a blended product in the desired manner.

After the product is blended the tube 11 is withdrawn from engagement with the container and to permit the container to be removed from the housing 7 ready for use and consumption.

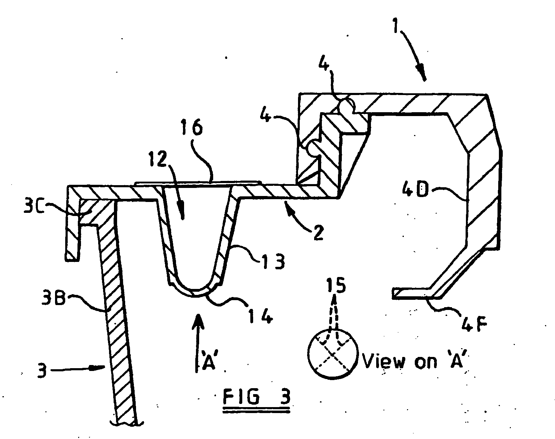

Referring to Fig 3, there is shown an optional feature of the container of Figs 1 and 2. In this arrangement a portion of the lid 2 between the member 1 and the edge of the lid is formed with a circular opening 12 from which inwardly extends a depression 13 at the lower, inward end of which is formed a closure 14 which includes weakened portions as seen at 15 in the scrap view A of Fig 3. The opening 12 may be sealed by a diaphragm 16 over the upper end of the opening, the diaphragm being removable by peeling off or otherwise.

The purpose of the opening 12 in the lid 2 is to give access into the container for a nozzle through which pressurised gas may be injected into the product. The nozzle (not shown) may be inserted through the base of the opening 12 breaking the frangible or weakened areas 15 in said base of the container or by the base being open and being normally sealed with a diaphragm at its upper end. By this means contamination of the nozzle is avoided or minimised. Alternatively the nozzle can seal with the side walls of the depression 13, the pressure of the gas breaking open the portion 14 by breaking through the weakened lines 15. The diaphragm 16 provides added security to prevent product escaping through the opening 12. Another opening in the lid may be provided for releasing pressure in the container, for example if it exceeds preset levels. An exhaust gas nozzle may be introduced through said further opening.

It will be seen that the opening 12 is offset from the centre of the container but, if desired, the opening may be central with the impeller 1 offset to one side of the axis A.

Product to be blended in the container can take a variety of forms but generally consists of two or more components for example dairy fat, sugar, emulsifiers, stabilisers, milk, flavouring, ice etc. These components may be pre-filled into the body 3 of the container at a central location or can be filled at the place of consumption.

Alternatively there may be a single product in which ice may have formed as crystals within the product. Blending can be used to break down the crystals into small ice particles. Moreover blending may be of a single product of which a blended consistency is required.

In some cases product does not occupy the entire container when filled to allow for aeration and expansion of blended product in the container.

There are various other aspects of this invention which can be adopted amongst which is that the operation of the blending action can be timed to provide a blending action for a predetermined period, and the operation of the locating means for the containers can also be timed to match the duration of blending.

Instead of the lid being removable for access to product, or the use of a straw to access product, the lid may have a portion which can be torn off to give access to the product. Moreover the lid may be removable to insert additives into the product prior to or after blending. For example if the apparatus were used for cocktails with an alcohol content the alcohol can be added before, during or after blending.

The containers may be filled with product and supplied to the user without the lid being fitted to the container and with a simple peel-off or tear-off cover. This allows the lid and associated blending element to be fitted at the point of sale prior to blending, or when serving. The blending elements may be constructed to allow the elements to be nested one inside the other to provide minimum volume during shipping and also to permit handling on automatic machinery.

The motor housing may have more than one drive shaft extending therefrom to permit several containers of product to be blended at the same time.

For efficient blending of the product its viscosity should allow a vortex to be formed inside the container whilst the product is being blended or liquid may be added at blending. When multiple components are included in the product they may be deep frozen for ease of distribution and storage. The product may then be placed in a tempering cabinet, held at a specified temperature, to warm the product up to the required blending temperature which may be between +5 C and -10 C dependent on the type of product. Once the blending temperature has been reached inside the tempering unit the components will have different consistency. Thus one element may be a liquid of low viscosity to act as the vortex catalyst during blending whilst another component contains other products and solids required in the final product. It may be advantageous to have the low viscosity component located in the container adj acent the impeller so that this liquid is in direct contact with the rotary blending element during the blending process. A single component may be fed into the container which separates into two or more components during storage and prior to a blending operation.

The components of the product can be extruded into the container, they may be fed by volume using piston and cylinders, or they may be fed by time lapse arrangements or by other means. A different filling station will usually be required for each component of the product and air may be introduced into the product during the processing and filling stage. Similarly flavouring liquids can be included in the container as a separate component at the blending stage rather than introducing the flavoured components when the container is packed. Moreoverparticulate components may be added with low water content components to achieve the best conditions for blending.

Addition of components may also be conducted shortly before the blending operation and these components may be introduced through an opening in the container lid, for example the opening for the straw, either manually or automatically.

The material from which the container body 3, lid 2 and rotary element 1 are made will usually be plastics material, preferably being recyclable plastics. The various parts of the container may be made by injection or thermo moulding and the container will be of thin walled plastics to suffice for a single use requirement and disposal after use.

The motor driving the blending operation may have means for detecting the driving torque to ensure that the maximum torque applied does not exceed a pre-set level. This would ensure that where the product within the container is of the incorrect consistency (perhaps due to being the wrong temperature) blending cannot occur since the rotary element may be unable to withstand the forces involved. However the rotary element should be made of material which will not fracture but will distort if overload should occur. In addition the connection between the drive shaft and the rotary member may be such that, if excessive forces are applied, the opening in the rotary element will distort and allow freewheeling of the drive shaft. In addition the torque on the impeller or the current to the drive motor can be detected to determine the viscosity of the product during blending. This enables the motor to operate until the blended product reaches the desired viscosity.

The lid 2 may be heat sealed to the container body 3A to effect a permanent connection and in this case the lid may have a peel-back or tear-off portion to allow the product to be poured out of the container. This arrangement would be particularly appropriate for products such as frozen cocktails. Moreover the product may be consumed direct from the container.

The containers with at least part of the product contained therein may be kept at ambient temperatures without the need for refrigeration, especially ifUHT products are used and the container is kept in a sterile condition. The container is kept in a sealed condition, cooled and the seal removed for use with the possible addition of low temperature or other product before dispensing. The low temperature product may be ice, cold liquid, or both and, after blending, a chilled or frozen dessert may be provided.

The apparatus of the invention may be used for cold or frozen products but can also be used for products at ambient or higher temperatures, such as hot chocolate, custard, sauces, mashed potato, tea, coffee etc. For this purpose the blending operation may be performed in an environment im which a microwave heating facility can operate.

Instead of the containers being filled remotely from the point of sale, filling can take place at or close to the point at which blending takes place. Freeze dry components, liquids and ice can be added at point of sale, the lid then being fitted and the product being blended and served to the customer. Feeding of components of product into the container may be manual, semi-automatic or fully automatic. When ice is used, such as crushed ice, the rotary member can break down the ice to a suitable size for the product. Moreover other cooling material such as frozen carbon dioxide, or carbon dioxide 'snow' produced from liquid carbon dioxide, can be inserted into the container for mixing and chilling the product before or during blending.

Compressed gas such as carbon dioxide may be used for chilling product and carbonated drinks may be produced by injecting pressurised carbon dioxide gas before or during blending of the product. A temperature detector may be employed to control the amount of chilling required.

In the blending apparatus described thus far it is intended that the container, its lid and the rotary member be disposable after blending and consumption. However a non-disposable, re-usable rotary element may be employed which is fitted to a lid which is applied to the container during blending. The rotary element would be easily removable from the drive for cleaning after use and may be formed of more durable material, such as metal components, cleanable in dishwashing apparatus.

The motor for driving the rotary element may be powered by batteries, the usual electricity supply or by air motor, the latter being from a compressed air reservoir or otherwise.

If the product to be blended needs to be heated steam injection or hot water addition can be used.

If different sized containers are required common components can-be employed for the lid and rotary element assembly with the container being of different depths. In this way the customer can be offered a full range of sizes without difficulty.

If it is desired to have chilled or partly frozen product, the containers with product may be kept at a low temperature such, for example, as to form ice crystals inside the container which are then blended with the product during the blending stage. Moreover by chilling or freezing the product close to the point of sale using suitable product components, the filled containers can be transported at normal ambient temperatures, then chilling or freezing the product upon arrival at point of sale.

Aseptically prepared or sterilised containers provide considerable advantages in that the filled containers have a relatively long shelf life without freezing being necessary. In filling containers aseptically hot product may be used at pasteurising temperatures which assists in ensuring that the container and its contents are aseptically prepared. To ensure that the container thus filled is secure against any risk of the product being exposed to the environment the blender assembly should be fully sealed against ingress or egress of contaminants. For this purpose the blender assembly may be fully sealed at least until blending is to be performed. One way of achieving such a seal is to unite the assembly and the container body with a frangible weld between the rotatable plastics components and their housing, a seal being provided until torque is applied either manually or by the drive motor to the rotatable component. Alternatively the frangible weld may be broken by the use of a tool or by engagement with a tool member when the container is placed on the drive shaft. The frangible weld is located to seal the small gap between the cooperating surfaces provided between the rotatable component and its housing. In one arrangement a portion of the container is interposed between and connected to each of an input drive rotor part and an impeller part of the blender. Said container portion is connected to the main body of the container through a frangible connection which provides the seal between the interior and exterior of the container until the connection is broken. This conveniently occurs when driving torque is applied to the blender or otherwise, as previously described.

The frangible connection may be provided by an annular weakened region of thin section.

The drive motor part and the impeller part may each be drivingly connected to each other through said portion of the container by, for example, welding to the container portion. By this means the container portion becomes part of the rotatable blender when blending takes place and said container portion becomes disconnected from the container at said frangible connection. Other means, such as a sealing ring, may also be provided for this purpose.

Utilising the container and apparatus of the invention the equipment lends itself to a manufacturing, filling, transportation and dispensing system which has wide application in dispensing foods in a hygienic and cost-effective manner.

Normally the containers will be manufactured at a manufacturing site remote from a site at which the containers are charged with the product. The containers, being intended for disposal and recycling, should occupy little space during transport to a location at which the containers are to be charged. Hence the containers are nestable with each other, as described, the base of one container being located inside and adjacent the base of another container.

The containers, still nested inside one another, are located for filling by standard filling machinery and are de-nested just prior to, during, or after each is filled. After the containers are filled with food product they are sealed by applying sealing means over the upper filling opening. The sealing means is preferably a heat sealed lid or a membrane sealed onto the rim of the upper opening. Alternatively or in addition a clip-on removable lid is applied to seal the container. In addition the base of the container is sealed to prevent any communication between the internal contents and outside. Such a seal is usually a heat sealed membrane applied across the drive access in the base of the container and removable to gain access to drive the blender.

After filling and sealing the container, its contents can be cooled and frozen to a low storage temperature. Alternatively the container and its contents may be kept at ambient temperatures after filling. The latter would be appropriate when the containers, its contents and the environment are aseptically controlled and in this case membrane protection over the upper filling opening and the drive shaft should be provided. In this case the container and its contents can be transported without freezing but will usually need to be cooled below freezing point before the product is blended in order to obtain ice particles in the product and to obtain a product of the temperature required for consumption, especially if the product is milk shake. However, even with aseptically controlled product, freezing can be undertaken after filling, for quality control purposes.

Filled containers at frozen or ambient temperatures are transported to their place of consumption at which the product is to be blended. In the case in which the product is at ambient temperature during transport, cooling and, if desired, freezing will be undertaken prior to blending to provide a cold product, with or without ice in it, for consumption.

In the case in which the product is transported frozen it may need to be tempered to higher, but still frozen, temperature prior to blending. This may be done in a tempering cabinet, set at a tempering temperature, in which the containers are stored and warmed up to a dispensing/blending temperature.

When the product is to be consumed, the container is placed in the blending apparatus and blending is effected, as described. Blending may involve penetration or removal of the seal on the base to access the blender drive. Usually the upper opening remains sealed during blending except when injection into the container is required.

When blended the product is ready for consumption by piercing the seal or by removing the seal to gain access to the contents by a straw, spoon or by pouring, as required. After consumption from the container the empty container is disposed of. Disposal is cost-effective because the container is, by its construction, relatively cheap to make, even with the in-built blender.

It will be seen that the blending apparatus offers the opportunity of dispensing blended products in a quick, safe and hygienic environment with the possibility of filling containers at a remote location or of introducing the product component just prior to blending. The arrangement is cost effective and efficient.

## Claims

1. Apparatus for blending food products comprising a container (3) and a lid (2) for the container, wherein rotary blending means (1) are carried on the lid, the blending means being driveably connectable to drive means (8) externally of the container for rotation thereof, the apparatus further comprising a seating (7) for supporting the container with its lid lowermost for blending and having drive means directed upwardly for engagement with the blending means, **characterised in that** the container includes a lip about its open end, and the lid having an outer portion (2A) to fit over the lip to be sealingly engaged over the open end.

2. Apparatus according to claim 1 wherein the container (3) is disposable.

3. Apparatus according to claim 1 or claim 2 the apparatus including a tube (11) which is suitable to surround the container (3) and is suitable to engage an underside of the lip so as to hold the lip between the tube and the lid (2)..

4. Apparatus according to any of claims 1 to 3 wherein the seating (7) has locating means for locating the container (3) during blending.

5. Apparatus according to any of claims 1 to 4 wherein the containers (3) are nestable with each other by locating a container into an open end of another container.

## Patentansprüche

1. Vorrichtung zum Mischen von Nahrungsmitteln, umfassend einen Behälter (3) und einen Deckel (2) für den Behälter, wobei eine rotierende Mischvorrichtung (1) an dem Deckel angebracht ist und die Mischvorrichtung mit einer Antriebsvorrichtung (8) außerhalb des Behälters in Antriebsverbindung gebracht werden kann, um ihn zu drehen, wobei die Vorrichtung ferner für das Mischen eine Stütze (7) zum Halten des Behälters mit nach unten gekehrtem Deckel umfasst und Antriebsmittel aufweist, die zum Eingriff mit der Mischvorrichtung nach oben gerichtet sind, **dadurch gekennzeichnet, dass** der Behälter eine Lippe um sein oberes Ende aufweist, wobei der Deckel einen äußeren Bereich (2A) aufweist, der auf die Lippe passt, um abdichtend über das obere Ende einzugreifen.

2. Vorrichtung nach Anspruch 2, wobei der Behälter (3) entsorgt werden kann.

3. Vorrichtung nach Anspruch 1 oder Anspruch 2, wobei die Vorrichtung eine Röhre (11) aufweist, die geeignet ist, den Behälter (3) zu umgeben, und die geeignet ist, mit einer Unterseite der Lippe einzugreifen, um die Lippe zwischen der Röhre und dem Deckel (2) zu halten.

4. Vorrichtung nach einem der Ansprüche 1 bis 3, wobei die Stütze (7) Zentriermittel aufweist, um den Behälter (3) während des Mischens zu zentrieren.

5. Vorrichtung nach einem der Ansprüche 1 bis 4, wobei die Behälter (3) in einander geschachtelt werden können, indem ein Behälter in ein offenes Ende eines anderen Behälters platziert wird.

## Revendications

1. Appareil pour mélanger des produits alimentaires comprenant un récipient (3) et un couvercle (2) pour le récipient, dans lequel des moyens mélangeurs rotatifs (1) sont montés sur le couvercle, les moyens mélangeurs pouvant être raccordés de façon à pouvoir être commandés à des moyens d'entraînement (8) à l'extérieur du récipient pour sa rotation, l'appareil comprenant de plus une embase (7) pour supporter le récipient avec son couvercle dans la partie la plus basse pour le mélange et ayant les moyens d'entraînement dirigés vers le haut pour la coopération avec les moyens mélangeurs, **caractérisé en ce que** le récipient comprend une lèvre autour de son extrémité ouverte, et le couvercle ayant une portion extérieure (2A) s'ajustant sur la lèvre pour coopérer de manière étanche sur l'extrémité ouverte.

2. Appareil selon la revendication 1, dans lequel le récipient (3) est jetable.

3. Appareil selon la revendication 1 ou la revendication 2, l'appareil comprenant un tube (11) qui est apte à entourer le récipient (3) et apte à coopérer avec le côté inférieur de la lèvre de façon à maintenir la lèvre entre le tube et le couvercle (2).

4. Appareil selon l'une quelconque des revendications 1 à 3, dans lequel l'embase (7) présente des moyens pour positionner le récipient (3) pendant le mélange.

5. Appareil selon l'une quelconque des revendications 1 à 4, dans lequel les récipients (3) sont emboîtables les uns dans les autres en positionnant un récipient dans une extrémité ouverte d'un autre récipient.
